(19) 

Europäisches
Patentamt
European
Patent Office
Office européen
des brevets

(11) **EP 4 024 328 B1**

(12) **EUROPEAN PATENT SPECIFICATION**

(45) Date of publication and mention
of the grant of the patent:
**12.07.2023   Bulletin 2023/28**

(21) Application number: **21791231.0**

(22) Date of filing: **25.06.2021**

(51) International Patent Classification (IPC):
*G06T 3/40* *(2006.01)*

(52) Cooperative Patent Classification (CPC):
**G06T 3/4038**

(86) International application number:
**PCT/CN2021/102343**

(87) International publication number:
**WO 2022/095473 (12.05.2022 Gazette 2022/19)**

(54) **METHOD AND APPARATUS FOR MAP FUSION, SERVER AND STORAGE MEDIUM**

VERFAHREN UND GERÄT ZUR KARTENFUSION, SERVER UND SPEICHERMEDIUM

PROCÉDÉ ET APPAREIL POUR LA FUSION DE CARTES, SERVEUR ET SUPPORT
D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **05.11.2020   CN 202011224448**

(43) Date of publication of application:
**06.07.2022   Bulletin 2022/27**

(73) Proprietor: **Guangzhou Xiaopeng Autopilot
Technology Co., Ltd.
Guangzhou, Guangdong 510640 (CN)**

(72) Inventors:
• LIU, Zhongyuan
  **Guangdong 510640 (CN)**
• CHAI, Wennan
  **Guangdong 510640 (CN)**
• LI, Hongjun
  **Guangdong 510640 (CN)**
• HUANG, Ya
  **Guangdong 510640 (CN)**
• GU, Minghui
  **Guangdong 510700 (CN)**
• XIAO, Zhiguang
  **Guangdong 510640 (CN)**
• JIANG, Shaofeng
  **Guangdong 510640 (CN)**
• LAI, Jianming
  **Guangdong 510700 (CN)**

• GUANG, Xueling
  **Guangdong 510700 (CN)**
• GAO, Xinyu
  **Guangdong 510700 (CN)**
• ZHANG, Bo
  **Guangdong 510700 (CN)**

(74) Representative: **Ran, Handong
Maucher Jenkins
Seventh Floor Offices
Artillery House
11-19 Artillery Row
London SW1P 1RT (GB)**

(56) References cited:
CN-A- 109 920 055    CN-A- 110 163 963
CN-A- 110 288 710    CN-A- 111 174 799
CN-A- 112 308 810    US-A1- 2015 019 121

• REHDER EIKE ET AL: "Submap-based SLAM for
road markings", 2015 IEEE INTELLIGENT
VEHICLES SYMPOSIUM (IV), IEEE, 28 June 2015
(2015-06-28), pages 1393-1398, XP033209907,
DOI: 10.1109/IVS.2015.7225910 [retrieved on
2015-08-26]
• TONG QIN ET AL: "AVP-SLAM: Semantic Visual
Mapping and Localization for Autonomous
Vehicles in the Parking Lot", ARXIV.ORG, 8 July
2020 (2020-07-08), XP081714410,

**Description**

**CROSS-REFERENCE TO RELATED APPLICATIONS**

This application claims priority to Patent Application No. 202011224448.3, titled "MAP FUSION METHOD, MAP FUSION APPARATUS, SERVER, AND STORAGE MEDIUM", filed on November 5, 2020.

**FIELD**

The present disclosure relates to the field of map technology, and more particularly, to a map fusion method, a map fusion apparatus, a server, and a storage medium.

**BACKGROUND**

With the development of smart vehicles, the accuracy of positioning and sensing of the vehicles is increasingly higher, and accordingly, maps are required to have higher accuracy and larger coverage. In order to meet the high requirements of vehicles on maps, the more accurate map can be obtained through map fusion.
However, in the related art, when performing three-dimensional map fusion, there will be errors between different maps due to the different accuracy of different maps or different collected data, thereby resulting in complicated calculations during the map fusion and increasing the amount of calculation. Thus, the efficiency of map fusion is reduced, and it is hard to guarantee the accuracy of the map after fusion. REHDER EIKE et al. (" Submap-based SLAM for road markings", 2015 IEEE INTELLIGENT VEHICLES SYMPOSIUM (IV), IEEE, 28 June 2015 (2015-06-28), pages 1393-1398) proposes a submap-based SLAM for road markings by registration of local occupancy gridmaps for map stitching. TONG QIN et al. ("AVP-SLAM: Semantic Visual Mapping and Localization for Autonomous Vehicles in the Parking Lot", ARXIV.ORG, 8 July 2020 (2020-07-08)) proposes a semantic-feature-based mapping and localization system, which enables vehicles to automatically navigate in parking lots.

**SUMMARY**

In view of the above problems, provided are a computer-implemented map fusion method, a map fusion apparatus, a server, and a storage medium, for overcoming the above problems or at least partially solve the above problems.
The -A- map fusion method includes: obtaining first three-dimensional map data and second three-dimensional map data; determining, for at least two first semantic elements in the first three-dimensional map data, at least two second semantic elements in the second three-dimensional map data that match the at least two first semantic elements; determining first relative information between the at least two first semantic elements, and determining second relative information between the at least two second semantic elements; optimizing the first three-dimensional map data and the second three-dimensional map data based on the first relative information and the second relative information; and performing a map fusion on the optimized first three-dimensional map data and the optimized second three-dimensional map data. Said optimizing the first three-dimensional map data and the second three-dimensional map data based on the first relative information and the second relative information includes: determining target information of the at least two first semantic elements and the at least two second semantic elements based on the first relative information and the second relative information; and optimizing the first three-dimensional map data and the second three-dimensional map data based on the target information of the at least two first semantic elements and the at least two second semantic elements, where wherein the first relative information includes first two-dimensional relative information and first three-dimensional relative information, the second relative information includes second two-dimensional relative information and second three-dimensional relative information, and the target information includes target two-dimensional information and target three-dimensional information. The first two-dimensional relative information includes first relative pose information, the second two-dimensional relative information includes second relative pose information, and the target two-dimensional information is target pose information; said determining the target information of the at least two first semantic elements and the at least two second semantic elements based on the first relative information and the second relative information includes: determining a pose error value based on the first relative pose information and the second relative pose information; determining, based on the pose error value, an association between pose information of the at least two first semantic elements and the at least two second semantic elements and a relative pose error; and determining the target pose information of the at least two first semantic elements and the at least two second semantic elements under a premise of a minimum relative pose error.
Optionally, the first three-dimensional relative information includes first relative height information, the second three-dimensional relative information includes second relative height information, and the target three-dimensional information is target height information; said determining the target information of the at least two first semantic elements and the at least two second semantic elements based on the first relative information and the second relative information includes: determining a height error value based on the first relative height information and the second relative height information; determining, based on the height error value, an association between height information of the at least two first semantic elements and the at least two second semantic elements and a relative height error; and determining target height information of the at least two first semantic elements and the at least two second semantic elements under a premise of a minimum relative height error.

Optionally, prior to said determining first relative information between the at least two first semantic elements, and said determining second relative information between the at least two second semantic elements, the method further includes: determining a first conversion matrix for the first three-dimensional map data and a second conversion matrix for the second three-dimensional map data based on the at least two first semantic elements and the at least two second semantic elements; and adjusting the first three-dimensional map data by using the first conversion matrix, and adjusting the second three-dimensional map data by using the second conversion matrix.

Optionally, the method further includes: determining a third semantic element in the first three-dimensional map data, where no matching semantic element in the second three-dimensional map data matches the third semantic element; and adding the third semantic element to the map-fused second three-dimensional map data.

Optionally, the first three-dimensional map data and the second three-dimensional map data are map data for a parking lot.

A map fusion apparatus includes a three-dimensional map data obtaining module configured to obtain first three-dimensional map data and second three-dimensional map data; a semantic element determining module configured to determine, for at least two first semantic elements in the first three-dimensional map data, at least two second semantic elements in the second three-dimensional map data that match the at least two first semantic elements; a relative information determining module configured to determine first relative information between the at least two first semantic elements, and determine second relative information between the at least two second semantic elements; an optimization module configured to optimize the first three-dimensional map data and the second three-dimensional map data based on the first relative information and the second relative information; and a fusion module configured to perform a map fusion on the optimized first three-dimensional map data and the optimized second three-dimensional map data. The optimization module includes: a target information determining sub-module configured to determine target information of the at least two first semantic elements and the at least two second semantic elements based on the first relative information and the second relative information; and a three-dimensional map data optimization sub-module configured to optimize the first three-dimensional map data and the second three-dimensional map data based on the target information of the at least two first semantic elements and the at least two second semantic elements, where the first relative information includes first two-dimensional relative information and first three-dimensional relative information, the second relative information includes second two-dimensional relative information and second three-dimensional relative information, and the target information includes target two-dimensional information and target three-dimensional information. The first two-dimensional relative information includes first relative pose information, the second two-dimensional relative information includes second relative pose information, and the target two-dimensional information is target pose information; and the target information determining sub-module includes: a pose error determining unit configured to determine a pose error value based on the first relative pose information and the second relative pose information; a relative pose error association determining unit configured to determine, based on the pose error value, an association between pose information of the at least two first semantic elements and the at least two second semantic elements and a relative pose error; and a target pose information determining unit configured to determine the target pose information of the at least two first semantic elements and the at least two second semantic elements under a premise of a minimum relative pose error.

A server includes a processor, a memory, and a computer program stored on the memory and capable of running on the processor. The computer program, when executed by the processor, causes the processor to implement the map fusion method as described above.

A computer-readable storage medium, having a computer program stored thereon. The computer program, when executed by a processor, causes the processor to implement the map fusion method as described above.

The embodiments of the present disclosure have the following advantages.

In the embodiments of the present disclosure, by obtaining the first three-dimensional map data and the second three-dimensional map data, for at least two first semantic elements in the first three-dimensional map data, at least two second semantic elements that match the at least two first semantic elements are determined in the second three-dimensional map data; the first relative information between the at least two first semantic elements is determined, and the second relative information between the at least two second semantic elements is determined; the first three-dimensional map data and the second three-dimensional map data are optimized based on the first relative information and the second relative information; and the map fusion is performed on the optimized first three-dimensional map data and the optimized second three-dimensional map data. In this way, the three-dimensional map data can be optimized, the process of map fusion is simplified, the amount of calculation is reduced, and the accuracy and efficiency of map fusion are improved.

## BRIEF DESCRIPTION OF DRAWINGS

In order to more clearly explain the technical solutions of the present disclosure, the accompanying drawings used in the description are briefly introduced. Obviously, the accompanying drawings in the following description are merely some embodiments of the present disclosure. Those skilled in the art can obtain other drawings based on these drawings without paying creative efforts.

FIG. 1 is a flowchart illustrating steps of a map fusion method according to an embodiment of the present disclosure;
FIG. 2a is a flowchart illustrating steps of another map fusion method according to an embodiment of the present disclosure;
FIG. 2b is a schematic top view illustrating semantic elements according to an embodiment of the present disclosure;
FIG. 2c is a schematic side view illustrating semantic elements according to an embodiment of the present disclosure;
FIG. 3 is a flowchart illustrating steps of yet another map fusion method according to an embodiment of the present disclosure;
FIG. 4 is a schematic diagram illustrating an instance of map fusion according to an embodiment of the present disclosure; and
FIG. 5 is a schematic diagram illustrating a structure of a map fusion apparatus according to an embodiment of the present disclosure.

## DESCRIPTION OF EMBODIMENTS

In order to make the above objectives, features, and advantages of the present disclosure more obvious and understandable, the present disclosure will be further described in detail below in conjunction with the accompanying drawings and specific implementations. Obviously, the described embodiments are only part of, not all of the embodiments of the present disclosure. Based on the embodiments of the present disclosure, all other embodiments obtained by those skilled in the art without paying creative efforts shall fall within the protection scope of the present disclosure, as long as those obtained embodiments are covered by the appended claims.

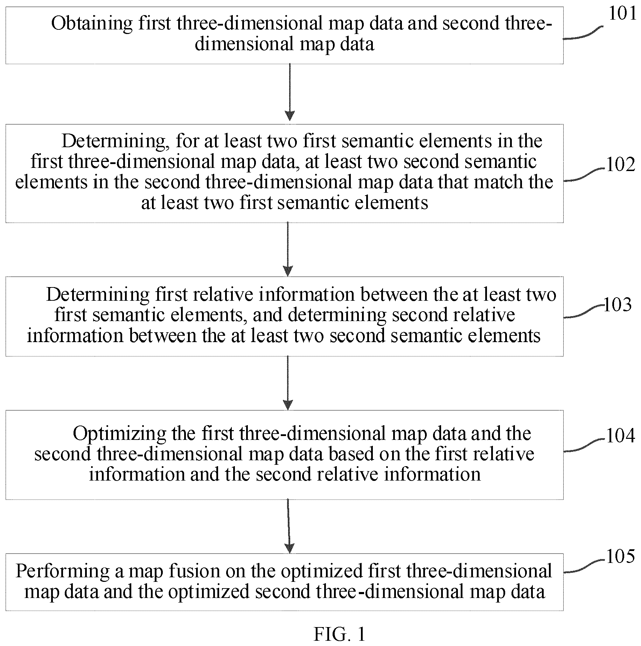

FIG. 1 is a flowchart illustrating steps of a map fusion method according to an embodiment of the present disclosure. Referring the FIG. 1, the method specifically includes the following steps.

In step 101, first three-dimensional map data and second three-dimensional map data are obtained.

The three-dimensional map data may be three-dimensional semantic map data containing multiple semantic elements, and the semantic element may be one of parking space information, speed bump information, roadblock information, lane line information, etc.

As an example, the first three-dimensional map data and the second three-dimensional map data may be map data for a parking lot.

When map fusion is performed, at least two pieces of three-dimensional map data preset in the vehicle for a target area may be acquired, at least two pieces of three-dimensional map data for a target area may also be acquired from a server; at least one piece of three-dimensional map data preset in the vehicle for a target area may also be acquired, and at least one piece of three-dimensional map data for a target area may also be acquired from the server. That is, the first three-dimensional map data and the second three-dimensional map data are acquired.

In practical applications, a real-time map fusion can be performed in the in-vehicle computer, or a large number of map fusions can be performed in the server.

In step 102, for at least two first semantic elements in the first three-dimensional map data, at least two second semantic elements that match the at least two first semantic elements are determined in the second three-dimensional map data.

After at least two pieces of three-dimensional map data are obtained, at least two first semantic elements in any one piece of three-dimensional map data can be determined. For example, parking space information **a** and lane line information **b** in the first three-dimensional map data can be determined.

After the two semantic elements are determined, the second semantic elements that match the first semantic elements can be determined in another piece of three-dimensional map data. For example, based on the parking space information **a** and the lane line information **b** in the first three-dimensional map data, parking space information **A** matching the parking space information **a** and the lane line information **B** matching the lane line information **b** are determined among the multiple semantic elements of the second three-dimensional map data.

In step 103, first relative information between the at least two first semantic elements is determined, and second relative information between the at least two second semantic elements is determined.

Relative information may be two-dimensional or three-dimensional relative information between two semantic elements.

After the matching semantic elements are determined, the two-dimensional information and three-dimensional information of a semantic element can be determined. For example, a three-dimensional coordinate system in any piece of three-dimensional map data can be determined, such that coordinate information of the semantic element in the three-dimensional map data can be determined based on the coordinate system, and the two-dimensional information and three-dimensional information of the semantic element can be determined based on the coordinate information.

After the two-dimensional information and the three-dimensional information of the semantic element are determined, the two-dimensional relative information and the three-dimensional relative information of two semantic elements can be determined based on the two-dimensional information and the three-dimensional information of each of the two semantic elements, so as to obtain the first relative information of the first semantic element and the second relative information of the second semantic element.

For example, the two-dimensional information and the three-dimensional information of the parking space information **a** can be determined, and the two-dimensional information and the three-dimensional information of the lane line information **b** can be determined, such that the two-dimensional relative information and the three-dimensional relative information of the parking space information **a** and the lane line information **b,** i.e., the first relative information, can be determined.

In step 104, the first three-dimensional map data and the second three-dimensional map data are optimized based on the first relative information and the second relative information;

After the first relative information and the second relative information are obtained, based on the first relative information and the second relative information, the relative relationship between the first semantic elements and the relative relationship between the second semantic elements can be determined, and errors between the first semantic elements and the second semantic elements can be determined, for example, an error between the two-dimensional information of the parking space information **a** and the two-dimensional information of the parking space information **A,** or an error between the two-dimensional relative information of the parking space information **a** and the lane line information **b** and the two-dimensional relative information of the parking space information **A** and the lane line information **B.**

After the relative relationship and the errors between the first semantic elements and the second semantic elements are determined, the two-dimensional information and the three-dimensional information of the semantic element can be optimized and adjusted based on the relative relationship and the errors.

In step 105, a map fusion is performed on the optimized first three-dimensional map data and the optimized second three-dimensional map data.

After the three-dimensional map data is optimized, the number of fusions of different three-dimensional map data can be determined, and thus at least two piece of three-dimensional map data can be weighted and fused according to the different number of fusions.

In practical applications, since a large number of maps can be fused, there will be maps that have been fused multiple times. By determining the number of fusions of the map, and determining the difficulty of map fusion according to the number of fusions, the three-dimensional map data can be weighted and fused according to the difficulty, thereby improving the accuracy of the three-dimensional map fusion, and allowing the fused map to be more accurate.

In the embodiments of the present disclosure, by obtaining the first three-dimensional map data and the second three-dimensional map data, for at least two first semantic elements in the first three-dimensional map data, at least two second semantic elements that match the at least two first semantic elements are determined in the second three-dimensional map data; the first relative information between the at least two first semantic elements is determined, and the second relative information between the at least two second semantic elements is determined; the first three-dimensional map data and the second three-dimensional map data are optimized based on the first relative information and the second relative information; and the map fusion is performed on the optimized first three-dimensional map data and the optimized second three-dimensional map data. In this way, the three-dimensional map data can be optimized, the process of map fusion is simplified, the amount of calculation is reduced, and the accuracy and efficiency of map fusion are improved.

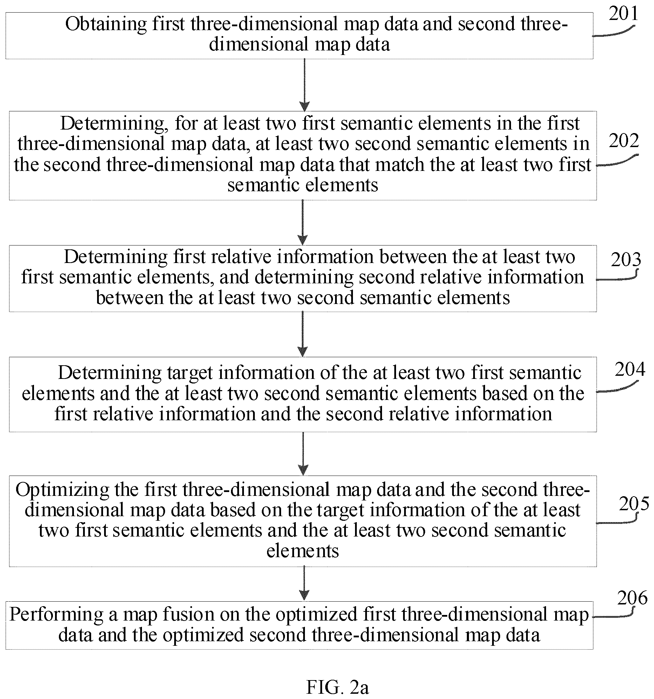

FIG. 2a is a flowchart illustrating steps of another map fusion method according to an embodiment of the present disclosure. Referring to FIG. 2a, the map fusion method specifically includes the following steps.

In step 201, first three-dimensional map data and second three-dimensional map data are obtained.

In step 202, for at least two first semantic elements in the first three-dimensional map data, at least two second semantic elements that match the at least two first semantic elements are determined in the second three-dimensional map data.

In step 103, first relative information between the at least two first semantic elements is determined, and second relative information between the at least two second semantic elements is determined.

The first relative information may include first two-dimensional relative information and first three-dimensional relative information, and the second relative information may include second two-dimensional relative information and second three-dimensional relative information.

After the matching semantic elements are determined, the two-dimensional information of the semantic element, such as pose information, and the three-dimensional information of the semantic element, such as height information, can be determined.

For example, a three-dimensional coordinate system in any piece of three-dimensional map data can be determined, such that coordinate information of the semantic element in the three-dimensional map data can be determined based on the coordinate system, and the pose information and height information of the semantic element can be determined based on the coordinate information.

In practical applications, rotation information relative to x-axis and rotation information relative to y-axis of the semantic element can also be determined, and the rotation of the semantic element can be optimized based on the rotation information relative to x-axis and the rotation information relative to y-axis.

However, since the semantic element do not have large errors in terms of the rotation information relative to x-axis and the rotation information relative to y-axis, the optimization of the rotation information will not bring greater improvements to the quality of map fusion. In addition, the optimization of the rotation information has a large amount of calculation, complex processing methods, and high hardware requirements. Therefore, by only optimizing the height information of the semantic element, the optimization process is simplified, the amount of calculation is reduced, and the accuracy of height optimization can be improved by determining information such as the relative height information, height error value, etc.

After the pose information and height information of the semantic element are determined, the two-dimensional relative information between the two semantic elements can be determined based on the pose information of each of the two semantic elements, and the three-dimensional relative information between the two semantic elements can be determined based on the height information of each of the two semantic elements.

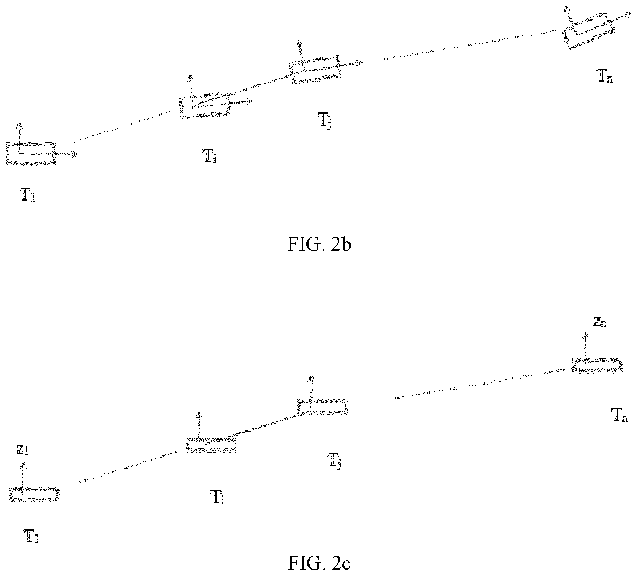

As illustrated in FIG. 2b, the pose information of a semantic element 1 to a semantic element n may include position information and angle information, and the position information and angle information of the semantic element may be determined based on the coordinate information, such that the position information and angle information can be transformed into the pose information of the semantic element, specifically through the following matrixes :

$$T_i = \begin{bmatrix} \cos(\phi_i) & -\sin(\phi_i) & tx_i \\ \sin(\phi_i) & \cos(\phi_i) & ty_i \\ 0 & 0 & 1 \end{bmatrix} \quad (1);$$

and

$$T_j = \begin{bmatrix} \cos(\phi_j) & -\sin(\phi_j) & tx_j \\ \sin(\phi_j) & \cos(\phi_j) & ty_j \\ 0 & 0 & 1 \end{bmatrix} \quad (2),$$

where the matrix (1) can be expressed as a pose used to transform a semantic element i in the three-dimensional map data, and the matrix (2) can be expressed as a pose used to transform a semantic element j in the three-dimensional map data; the semantic element i and the semantic element j can be the matching semantic elements in at least two pieces of three-dimensional map data, or any two semantic elements in the same three-dimensional map data; for matrix (1), $T_i$ can be expressed as an absolute pose of the semantic element i, $\varphi_i$ can be angle information of the semantic element i, t $x_i$ can be x-axis coordinate information of the semantic element i in the coordinate system, t $y_i$ can be y-axis coordinate information of the semantic element i in the coordinate system, the same is true for the matrix (2).

In an embodiment of the present disclosure, the height information of the semantic element 1 to the semantic element n may be as illustrated in FIG. 2c, and the height information of the semantic element may be determined based on the coordinate information, where $z_1$ may be expressed as height information of the semantic element 1.

In step 204, target information of the at least two first semantic elements and the at least two second semantic elements is determined based on the first relative information and the second relative information.

The target information may include target two-dimensional information and target three-dimensional information.

After the two-dimensional relative information and the three-dimensional relative information are obtained, based on the two-dimensional relative information and the three-dimensional relative information, the relative relationship between the first semantic elements and the relative relationship between the second semantic elements can be determined, and errors between the first semantic elements and the second semantic elements can be determined, for example, an error between the two-dimensional information of the parking space information **a** and the two-dimensional information of the parking space information **A,** and an error between the two-dimensional relative information of the parking space information **a** and the lane line information **b** and the two-dimensional relative information of the parking space information **A** and the lane line information **B.**

After the relative relationship and the errors between the first semantic elements and the second semantic elements are determined, based on the relative relationship and the errors, the target two-dimensional information and the target three-dimensional information of the first semantic element can be determined, and the target two-dimensional information and the target three-dimensional information of the second semantic element can be determined.

In an embodiment of the present disclosure, the first two-dimensional relative information may include first relative pose information, the second two-dimensional relative information may include second relative pose information, and the target two-dimensional information may be target pose information. Step 204 may include the following sub-steps:

In sub-step 11, a pose error value is determined based on the first relative pose information and the second relative pose information.

The pose error value may be a value of a relative pose error between the first relative pose information and the second relative pose information.

After the pose information of the semantic element is determined, the relative pose information between two semantic elements can be determined based on the pose information of each of the two semantic elements. Specifically, the relative pose information can be determined through the following matrix:

$$T_{ij} = T_i^{-1}T_j = \begin{bmatrix} R_i^T & -R_i^T t_i \\ 0 & 1 \end{bmatrix}\begin{bmatrix} R_j & t_j \\ 0 & 1 \end{bmatrix} = \begin{bmatrix} R_i^T R_j & R_i^T t_j - R_i^T t_i \\ 0 & 1 \end{bmatrix} = \begin{bmatrix} R(\phi_j - \phi_i) & R^T(\phi_i)(t_j - t_i) \\ 0 & 1 \end{bmatrix} \quad (3),$$

where a subscript i and a subscript j may be expressed as a semantic element i and a semantic element j, $T_{ij}$ may be a relative pose of the semantic element j with respect to the semantic element i, $T_i^{-1}$ may be an inverse matrix of the semantic element i, $R_j$ may be a conversion matrix of angle information of the semantic element j, $R_i^T$ may be a transposed matrix of a conversion matrix of angle information of the semantic element i, and $t_j$ may be a position of the semantic element j.

In an embodiment of the present disclosure, when the semantic element i and the semantic element j are any two semantic elements in the same three-dimensional map data, the relative pose information of the two semantic elements may be $T_{ij}$, and before optimization, the relative pose information between the two semantic elements can be distinguished from $T_{ij}$ by wavy lines, which can be specifically expressed as the following matrix:

$$\widetilde{T}_{ij} = \begin{bmatrix} R_{ij}(\widetilde{\phi}_{ij}) & \widetilde{t}_{ij} \\ 0 & 1 \end{bmatrix} \quad (4),$$

where $\widetilde{\varphi}_{ij}$, can be relative angle information of the two semantic elements before optimization, $R_{ij}(\widetilde{\varphi}_{ij})$ can be a conversion matrix of the relative angle information of the two semantic elements before optimization, and $\widetilde{t}_{ij}$ can be a relative position of the two semantic elements before optimization.

In an embodiment of the present disclosure, when the semantic element i and the semantic element j are matching semantic elements in at least two pieces of three-dimensional map data, the relative pose information of the two semantic elements may be $T_{ij}$, but $\widetilde{T}_{ij}$ may be an identity matrix, which can be specifically expressed as follows matrix:

$$\tilde{T}_{ij} = \begin{bmatrix} R_{ij}(\tilde{\varphi}_{ij}) & 0 \\ 0 & 1 \end{bmatrix} \quad (5),$$

where $\tilde{T}_{ij}$ can be an identity matrix of $\widetilde{T}_{ij}$, $\tilde{\varphi}_{ij}$ can be relative angle information of the two semantic elements before

optimization, and $R_{ij}(\widetilde{\varphi}_{ij})$ can be a conversion matrix of the relative angle information of the two semantic elements before optimization.

After the relative pose information is determined, the pose error value can be determined based on the relative pose information. Specifically, the pose error value can be determined through the following matrix:

$$\widetilde{T}_{ij}^{-1}T_{ij} = \begin{bmatrix} R^T(\widetilde{\phi}_{ij}) & -R^T(\widetilde{\phi}_{ij})\widetilde{t}_{ij} \\ 0 & 1 \end{bmatrix}\begin{bmatrix} R(\phi_j - \phi_i) & R^T(\phi_i)(t_j - t_i) \\ 0 & 1 \end{bmatrix}$$

$$= \begin{bmatrix} R^T(\widetilde{\phi}_{ij})R(\phi_j - \phi_i) & R^T(\widetilde{\phi}_{ij})R^T(\phi_i)(t_j - t_i) - R^T(\widetilde{\phi}_{ij})\widetilde{t}_{ij} \\ 0 & 1 \end{bmatrix} \quad (6),$$

where $\widetilde{T}_{ij}^{-1}$ can be an inverse matrix of $T_{ij}$, $R^T(\widetilde{\varphi}_{ij})$ can be a transposed matrix of a conversion matrix of the relative angle information of the two semantic elements, and $R^T(\varphi_i)$ can be a transposed matrix of a conversion matrix of the angle information of the semantic element i.

After the matrix (6) is determined, the matrix (6) can be converted into the following matrix:

$$e_{ij} = \begin{bmatrix} R^T(\widetilde{\phi}_{ij})R^T(\phi_i)(t_j - t_i) - R^T(\widetilde{\phi}_{ij})\widetilde{t}_{ij} \\ (\phi_j - \phi_i) - \widetilde{\phi}_{ij} \end{bmatrix} \quad (7),$$

where $e_{ij}$ can be expressed as a pose error value of the first relative pose information and the second relative pose information.

In an embodiment of the present disclosure, when the semantic element i and the semantic element j are any two semantic elements in the same three-dimensional map data, $e_{ij}$ can also be expressed as a pose error value of the first relative pose information or the second relative pose information.

In sub-step 12, based on the pose error value, an association between pose information of the at least two first semantic elements and the at least two second semantic elements and a relative pose error.

The relative pose error and the pose information may be independent variables in the association, or the relative pose error may be a dependent variable in the association, and the pose error value is a known value of the relative pose error.

After the pose error value is determined, based on the relative pose error as well as the corresponding first relative pose information and second relative pose information, the association between the relative pose error and the pose information of the first semantic elements and/or the second semantic elements is determined. The association can be the following formula:

$$f = \sum_{[i,j]\in all\ measurment} e_{k\_ij}^{\ T} w_k e_{k\_ij} \quad ,$$

where $f$ can be expressed as an association between relative pose error and pose information, $e_{k\_ij}$ can be the k-th pose error value, $e_{k\_ij}$ can be defined as a column vector, $e_{k\_ij}^{\ T}$ can be a transposed matrix of the k-th pose error value, and $w_k$ can be expressed as a map maturity, the map maturity may correspond to the number of map fusions.

In sub-step 13, under a premise of a minimum relative pose error, the target pose information of the at least two first semantic elements and the at least two second semantic elements is determined.

After the association formula between the relative pose error and the pose information is determined, since the association formula can be expressed as the association between the relative pose error and the pose information, under a premise of a minimum relative pose error, the target pose information corresponding to the minimum relative pose error is determined.

In practical applications, when the association formula is the smallest, i.e., when the value of $f$ is the smallest, the corresponding first relative pose information and/or second relative pose information can be calculated, and thus the corresponding position information and angle information can be determined. The position information and the angle information can be determined by the following formula:

$$\min_{\beta_1,\dots,\beta_i,\dots\beta_n} f = \sum_{\substack{k=1\dots m \\ [i,j]\in all\ measurment}} e_{k\_ij}{}^T w_k e_{k\_ij} \ ,$$

and

$$\beta_i = \begin{bmatrix} t_i \\ \phi_i \end{bmatrix}$$

where $\beta_i$ can be expressed as a matrix of position information and angle information of the semantic element i, and subscripts of $\beta$, 1 to n, can be expressed as position information and angle information of the semantic element 1 to semantic element n.

In an embodiment of the present disclosure, the first three-dimensional relative information may include first relative height information, the second three-dimensional relative information may include second relative height information, and the target three-dimensional information may be target height information. Step 204 may include the following sub-steps.

In sub-step 21, a height error value is determined based on the first relative height information and the second relative height information.

The height error value may be an error value between the first relative height information and the second relative height information.

After the height information of the semantic element is determined, any two semantic elements in one piece of the three-dimensional map data can be determined as a semantic element group, and the relative height information of any semantic element group can be determined based on the height information of the semantic elements. Similarly, the relative height information of any semantic element group in another piece of three-dimensional map data can also be determined, and the height error value can be determined based on the relative height information in different pieces of three-dimensional map data. The height error value can be determined by the following formula :

$$e_{zij} = z_j - z_i - \widetilde{z}_{ij} \ ,$$

where $e_{zij}$ can be expressed as the height error value, $z_j$ and $z_i$ can be expressed as the height information of the semantic element j and the height information of the semantic element i in one piece of the three-dimensional map data; the relative height information of the semantic element group consisting of the semantic element i and the semantic element j in the three-dimensional map data can be obtaining by taking the difference, i.e., $z_j$- $z_i$; and $\widetilde{z}_{ij}$ can be expressed as the relative height information of the semantic element group consisting of the matching semantic element i and semantic element j in another piece of three-dimensional map data before optimization.

In sub-step 22, based on the height error value, an association between the height information of the at least two first semantic elements and the at least two second semantic elements and a relative height error is determined.

After the height error value is determined, based on the height error value as well as the corresponding first relative height information and second relative height information, the association between the relative height error and the height information of the first semantic elements and the second semantic elements is determined. The association can be the following formula:

$$f_z = \sum_{\substack{k=1\dots m \\ [i,j]\in all\ measurment}} e_{zk\_ij}{}^T w_k e_{zk\_ij} \ ,$$

where $f_z$ may be expressed as an association between relative height error and height information, $e_{zk\_ij}$ may be expressed as a height error value between a k-th semantic element group in the first semantic elements and a k-th semantic element group in the second semantic elements, $e_{zk\_ij}{}^T$ may be expressed as a transposed matrix of the height error value between the k-th semantic element group in the first semantic elements and the k-th semantic element group in the second semantic elements, k may be used to mark the semantic element groups in the first semantic elements and the second semantic elements, the value of k does not affect the association formula, m may be a total number of semantic element groups in the first semantic elements or in the second semantic elements, and $w_k$ may be expressed as a map maturity, the map maturity may correspond to the number of map fusions.

For example, $e_{z1\_12}$ may be expressed as the height error value of the first semantic element group in the first semantic elements and the first semantic element group in the second semantic elements, and the first semantic elements may include a semantic element 1 and a semantic element 2, i.e., the semantic element 1 and the semantic element 2 in the first semantic elements, and the semantic element 1 and the semantic element 2 in the second semantic elements.

In sub-step 23, the target height information of the at least two first semantic elements and the at least two second semantic elements is determined under a premise of a minimum relative height error.

After the association formula is determined, since the association formula can be expressed as an association between the relative height error and the height information, under a premise of a minimum relative height error, the corresponding first relative height information and second relative height information can be calculated when the association formula between the relative height error and the height information is the smallest, i.e., when the value of $f_z$ is the smallest, and thus the corresponding target height information can be determined. A minimum value of $f_z$ may be obtained by determining a gradient of the correlation formula, for example, when the gradient is 0, the value of $f_z$ is the smallest, and thus the target height information can be determined. Specifically, it can be calculated by the following formula:

$$K\,z = b,$$

where z can be the target height information, b can be a situation represented by $-\nabla f|_{z=0}$, $K = \dfrac{\partial \nabla f}{\partial z}$, $\nabla f$ can be the gradient, $\dfrac{\partial \nabla f}{\partial z}$ can be a partial derivative for the height information in the gradient, and $-\nabla f|_{z=0}$ can represent $-\nabla_f$ when z=0.

As an example, the gradient can be expressed by the following matrix:

$$\nabla f = \begin{bmatrix} \dfrac{\partial f}{\partial z_1} & \cdots & \dfrac{\partial f}{\partial z_i} & \cdots & \dfrac{\partial f}{\partial z_n} \end{bmatrix}^T$$

$$= 2 \begin{bmatrix} \displaystyle\sum_{k=1}^{k=m} e_k{}^T w_k \dfrac{\partial e_k}{\partial z_1} & \cdots & \displaystyle\sum_{k=1}^{k=m} e_k{}^T w_k \dfrac{\partial e_k}{\partial z_i} & \cdots & \displaystyle\sum_{k=1}^{k=m} e_k{}^T w_k \dfrac{\partial e_k}{\partial z_n} \end{bmatrix}^T$$

(8),

where $\dfrac{\partial f}{\partial z_1}$ can be a partial derivative of the height information of semantic element 1 in the association formula for relative height error and height information, and subscripts of z, i.e., 1 to n, can be expressed as the height information of semantic element 1 to semantic element n, $e_k{}^T$ can be $e_{zk\_ij}{}^T$, and $\dfrac{\partial e_k}{\partial z_1}$ can be a partial derivative for the height information of the semantic element 1 in $e_k$.

It can be known from the above gradient that $K = \dfrac{\partial \nabla f}{\partial z}$ can be converted to $K_{ij} = \displaystyle\sum_{k=1}^{k=m} \dfrac{\partial e_k}{\partial z_i}{}^T w_k \dfrac{\partial e_k}{\partial z_j}$, and the value of z can be directly obtained by bringing $b = -\nabla f|_{z=0}$ into the above $K\,z = b$, that is, the target height information can be calculated.

In step 205, the first three-dimensional map data and the second three-dimensional map data are optimized based on the target information of the at least two first semantic elements and the at least two second semantic elements.

After the target information, such as the target pose information and the target height information, is obtained, the pose information and height information of the semantic element can be optimized and adjusted based on the target information.

In step 206, a map fusion is performed on the optimized first three-dimensional map data and the optimized second three-dimensional map data.

In the embodiments of the present disclosure, by obtaining the first three-dimensional map data and the second three-dimensional map data, for at least two first semantic elements in the first three-dimensional map data, at least two second semantic elements that match the at least two first semantic elements are determined in the second three-dimensional map data; the first relative information between the at least two first semantic elements is determined, and the second relative information between the at least two second semantic elements is determined; the target information of the at least two first semantic elements and the at least two second semantic elements is determined based on the first relative information and the second relative information; the first three-dimensional map data and the second three-dimensional map data are optimized based on the target information of the at least two first semantic elements and the at least two second semantic elements, where the first relative information includes the first two-dimensional relative information and the first three-dimensional relative information, the second relative information includes the second two-dimensional relative information and the second three-dimensional relative information, and the target information includes the target two-dimensional information and the target three-dimensional information; and the map fusion is performed on the optimized first three-dimensional map data and the optimized second three-dimensional map data. In this way, the two-dimensional information and the three-dimensional information in the three-dimensional map data can be optimized, the process of map fusion is simplified, the amount of calculation is reduced, and the accuracy and efficiency of map fusion are improved.

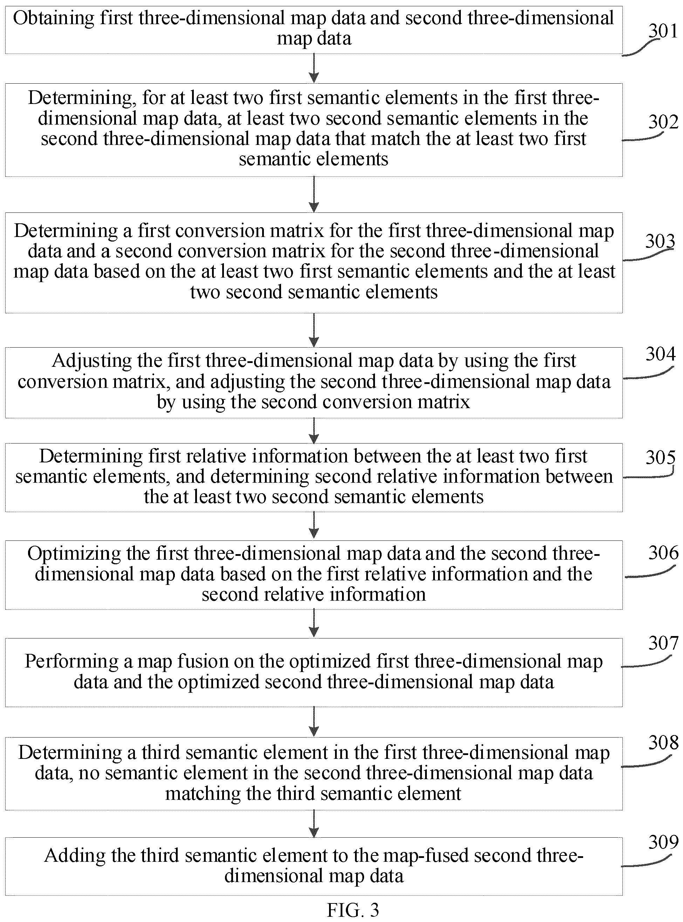

FIG. 3 is a flowchart illustrating steps of yet another map fusion method according to an embodiment of the present disclosure. Referring to FIG. 3, the map fusion method specifically includes the following steps.

In step 301, first three-dimensional map data and second three-dimensional map data are obtained;

In step 302, for at least two first semantic elements in the first three-dimensional map data, at least two second semantic elements that match the at least two first semantic elements are determined in the second three-dimensional map data;

In step 303, a first conversion matrix for the first three-dimensional map data and a second conversion matrix for the second three-dimensional map data are determined based on the at least two first semantic elements and the at least two second semantic elements.

The conversion matrix may be a matrix used for overall adjustment of the semantic elements in the three-dimensional map data.

After the matching semantic elements are determined, the position information of the matching semantic elements can be determined in different pieces of three-dimensional map data, such that the overall position information of the semantic elements in any piece of three-dimensional map data can be determined based on the position information of all the matching semantic elements in this piece of three-dimensional map data. Similarly, another overall position information can be determined in another piece of three-dimensional map data, and the conversion matrixes for different pieces of three-dimensional map data can be generated based on the different overall position information.

In step 304, the first three-dimensional map data is adjusted by using the first conversion matrix, and the second three-dimensional map data is adjusted by using the second conversion matrix.

After the conversion matrix is determined, the corresponding conversion matrix may be used to perform an overall weight adjustment on the different pieces of three-dimensional map data, such as the adjustment of overall position information.

The overall weight adjustment may include an adjustment of the position information of the matching semantic elements and an adjustment of the position information of other unmatching semantic elements.

In practical applications, at least two pieces of three-dimensional map data can be directly used for fusion to generate a topological three-dimensional map with multiple layers, and the three-dimensional map data of different layers can be adjusted based on the corresponding conversion matrixes, so as to obtain three-dimensional maps that overlap as much as possible.

In step 305, first relative information between the at least two first semantic elements is determined, and second relative information between the at least two second semantic elements is determined.

In step 306, the first three-dimensional map data and the second three-dimensional map data are optimized based on the first relative information and the second relative information.

In step 307, a map fusion is performed on the optimized first three-dimensional map data and the optimized second three-dimensional map data.

In step 308, a third semantic element in the first three-dimensional map data is determined, where no semantic element in the second three-dimensional map data matches the third semantic element.

When performing the map fusion, any one piece of the three-dimensional map data is used as a reference, and another piece of three-dimensional map data is fused into this piece of three-dimensional map data. For example, the three-dimensional map data **B** can be determined as a reference, and the three-dimensional map data **A** is fused into the three-dimensional map data **B.** Thus, after performing the map fusion on the optimized three-dimensional map data, the semantic element in the other piece of three-dimensional map data that fails to match the semantic element in this piece of three-dimensional map data can be determined. For example, the semantic element in the three-dimensional map data **A** that fails to match the semantic element in the three-dimensional map data **B** can be determined.

In step 309, the third semantic element is added to the map-fused second three-dimensional map data.

After the third semantic element is determined, since the third semantic element is a semantic element that fails to match the semantic element in the second three-dimensional map data, the third semantic element can be added to the second three-dimensional map data.

For example, as the semantic element in the three-dimensional map data **A** that fails to match the semantic element in the three-dimensional map data **B** can be determined, the unmatching semantic element can be added to the three-dimensional map data **B.**

In the embodiments of the present disclosure, by obtaining the first three-dimensional map data and the second three-dimensional map data, for at least two first semantic elements in the first three-dimensional map data, at least two second semantic elements that match the at least two first semantic elements are determined in the second three-dimensional map data; the first conversion matrix for the first three-dimensional map data and the second conversion matrix for the second three-dimensional map data are determined based on the at least two first semantic elements and the at least two second semantic elements; the first three-dimensional map data is adjusted by using the first conversion matrix, and the second three-dimensional map data is adjusted by using the second conversion matrix; the first relative information between the at least two first semantic elements is determined, and the second relative information between the at least two second semantic elements is determined; the first three-dimensional map data and the second three-dimensional map data are optimized based on the first relative information and the second relative information; the map fusion is performed on the optimized first three-dimensional map data and the optimized second three-dimensional map data; the third semantic element in the first three-dimensional map data is determined, where no semantic element in the second three-dimensional map data matches the third semantic element; and the third semantic element is added to the map-fused second three-dimensional map data. In this way, the three-dimensional map data can be adjusted and optimized, the process of map fusion is simplified, the amount of calculation is reduced, and the accuracy and efficiency of map fusion are improved.

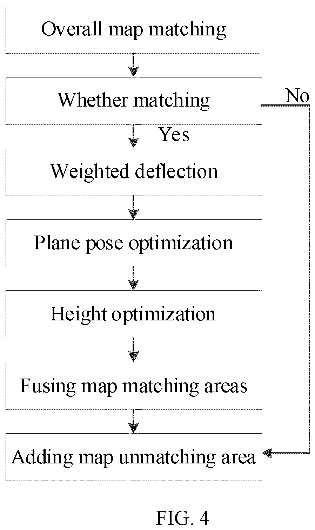

The embodiments of the present disclosure are illustratively described below in conjunction with FIG. 4.

1. When performing the map fusion, at least two pieces of three-dimensional map data can be obtained, at least two semantic elements in the first three-dimensional map data can be determined, and after these two semantic elements are determined, it is determined whether there are semantic elements in the second three-dimensional map data that match the semantic elements in the first three-dimensional map data;

2. If there are semantic elements in another piece of three-dimensional map data that match the first semantic elements, step 3 is performed; and if there are no matching semantic element in another piece of three-dimensional map data, steps 2 to 6 are skipped and step 7 is directly performed.

3. After the matching semantic elements are determined, the overall position information of the matching semantic elements can be determined in different pieces of three-dimensional map data, and then the conversion matrixes for the different pieces of three-dimensional map data can be generated based on the different overall position information. After the conversion matrixes are determined, the corresponding conversion matrixes can be used to adjust the different pieces of three-dimensional map data as a whole.

4. After the adjusted three-dimensional map data is obtained, the relative pose information between the two semantic elements can be determined based on the position information and angle information of the semantic elements, and the value of the relative pose error, i.e., the pose error value, can be determined based on the relative pose information. Thus, the association between pose information and relative pose error can be determined based on the relative pose information and the pose error value, and under a premise of a minimum relative pose error, the target pose information is determined to perform a plane pose optimization.

5. After performing the plane pose optimization, the relative height information between the two semantic elements can be determined based on the height information of the semantic elements, and the height error value can be determined based on the relative height information. Thus, the association between height information and relative height error can be determined based on the relative height information and the height error value, and under a premise of a minimum relative height error, the target pose information is determined to perform a height optimization.

6. After the three-dimensional map data is optimized, the number of fusions of different three-dimensional map data can be determined, and then at least two pieces of three-dimensional map data can be weighted and fused based on the different number of fusions.

7. The unmatching semantic elements in the two pieces of three-dimensional map data are fused, that is, the semantic element of one piece of three-dimensional map data is added to the other piece of three-dimensional map data.

It should be noted that, for the sake of simple description, the embodiments involving the method are all expressed as a series of actions in combination. However, those skilled in the art should know that the embodiments of the present disclosure are not limited by the order of the actions as described. According to the embodiments of the present disclosure, certain steps can be performed in other orders or simultaneously. In addition, those skilled in the art should also know that the embodiments described in the specification are all preferred embodiments, and the actions involved are not necessarily required by the embodiments of the present disclosure.

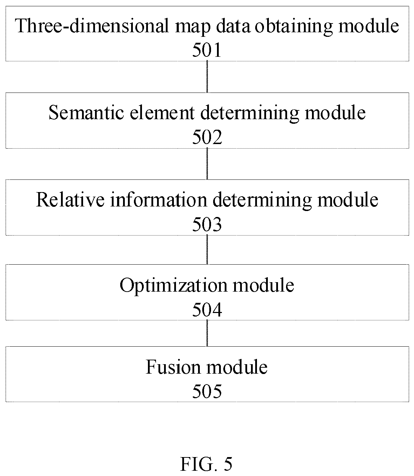

FIG. 5 is a schematic diagram illustrating a structure of a map fusion apparatus according to an embodiment of the present disclosure. Referring to FIG. 5, the map fusion apparatus specifically includes: a three-dimensional map data obtaining module 501, a semantic element determining module 502, a relative information determining module 503, an optimization module 504, and a fusion module 505.

The three-dimensional map data obtaining module 501 is configured to obtain first three-dimensional map data and second three-dimensional map data.

The semantic element determining module 502 is configured to determine, for at least two first semantic elements in the first three-dimensional map data, at least two second semantic elements that match the at least two first semantic elements in the second three-dimensional map data.

The relative information determining module 503 is configured to determine first relative information between the at least two first semantic elements, and determine second relative information between the at least two second semantic elements;

The optimization module 504 is configured to optimize the first three-dimensional map data and the second three-dimensional map data based on the first relative information and the second relative information.

The fusion module 505 is configured to perform a map fusion on the optimized first three-dimensional map data and the optimized second three-dimensional map data.

In an embodiment of the present disclosure, the optimization module 504 includes: a target information determining sub-module configured to determine target information of the at least two first semantic elements and the at least two second semantic elements based on the first relative information and the second relative information; and a three-dimensional map data optimization sub-module configured to optimize the first three-dimensional map data and the second three-dimensional map data based on the target information of the at least two first semantic elements and the at least two second semantic elements, where the first relative information includes first two-dimensional relative information and first three-dimensional relative information, the second relative information includes second two-dimensional relative information and second three-dimensional relative information, and the target information includes target two-dimensional information and target three-dimensional information.

In an embodiment of the present disclosure, the first two-dimensional relative information includes first relative pose information, the second two-dimensional relative information includes second relative pose information, and the target two-dimensional information is target pose information; and the target information determining sub-module includes: a pose error determining unit configured to determine a pose error value based on the first relative pose information and the second relative pose information; a relative pose error association determining unit configured to determine, based on the pose error value, an association between pose information of the at least two first semantic elements and the at least two second semantic elements and a relative pose error; and a target pose information determining unit configured to determine the target pose information of the at least two first semantic elements and the at least two second semantic elements under a premise of a minimum relative pose error.

In an embodiment of the present disclosure, the first two-dimensional relative information includes first relative height information, the second two-dimensional relative information includes second relative height information, and the target two-dimensional information is target height information; and the target information determining sub-module includes: a height error determining unit configured to determine a height error value based on the first relative height information and the second relative height information; a relative height error association determining unit configured to determine, based on the height error value, an association between height information of the at least two first semantic elements and the at least two second semantic elements and a relative height error; and a target height information determining unit configured to determine the target height information of the at least two first semantic elements and the at least two second semantic elements under a premise of a minimum relative height error.

In an embodiment of the present disclosure, the apparatus further includes a conversion matrix determining module configured to determine a first conversion matrix for the first three-dimensional map data and a second conversion matrix for the second three-dimensional map data based on the at least two first semantic elements and the at least two second semantic elements; and a three-dimensional map data adjustment module configured to adjust the first three-dimensional map data by using the first conversion matrix, and adjust the second three-dimensional map data by using the second conversion matrix.

In an embodiment of the present disclosure, the apparatus further includes a third semantic element determining module configured to determine a third semantic element in the first three-dimensional map data, where no matching semantic element in the second three-dimensional map data matches the third semantic element; and a third semantic element fusing module configured to add the third semantic element to the map-fused second three-dimensional map data.

In the embodiments of the present disclosure, by obtaining the first three-dimensional map data and the second three-dimensional map data, for at least two first semantic elements in the first three-dimensional map data, at least two second semantic elements that match the at least two first semantic elements are determined in the second three-dimensional map data; the first conversion matrix for the first three-dimensional map data and the second conversion matrix for the second three-dimensional map data are determined based on the at least two first semantic elements and the at least two second semantic elements; the first three-dimensional map data is adjusted by using the first conversion matrix, and the second three-dimensional map data is adjusted by using the second conversion matrix; the first relative information between the at least two first semantic elements is determined, and the second relative information between the at least two second semantic elements is determined; based on the first relative information and the second relative information, the target information of the at least two first semantic elements and the at least two second semantic elements is determined; based on the target information of the at least two first semantic elements and the at least two second semantic elements, the first three-dimensional map data and the second three-dimensional map data are optimized, where the first relative information includes the first two-dimensional relative information and the first three-dimensional relative information, the second relative information includes the second two-dimensional relative information and the second three-dimensional relative information, and the target information includes the target two-dimensional information and the target three-dimensional information; and the map fusion is performed on the optimized first three-dimensional map data and the optimized second three-dimensional map data; the third semantic element in the first three-dimensional map data is determined, and the third semantic element is added to the map-fused second three-dimensional map data. In this way, it is achieved that the two-dimensional information and the three-dimensional information in the three-dimensional map data are adjusted and optimized, the process of map fusion is simplified, the amount of calculation is reduced, and the accuracy and efficiency of map fusion are improved.

An embodiment of the present disclosure further provides a server, which may include a processor, a memory, and a computer program stored on the memory and executable on the processor. The computer program, when executed by the processor, implements the map fusion method as described above.

An embodiment of the present disclosure further provides a computer-readable storage medium having a computer program stored thereon. The computer program, when executed by the processor, implements the map fusion method as described above.

Since the apparatus embodiments are basically similar to the method embodiments, the description of the apparatus embodiments is relatively simple. For related description, reference may be made to a corresponding part of the description of the method embodiments.

Each embodiment in the specification is described in a progressive manner. Each embodiment focuses on the differences from other embodiments. The same or similar parts of various embodiments can be referred to each other.

Those skilled in the art should understand that the embodiments of the present disclosure can be provided as a method, an apparatus, or a computer program product. Accordingly, the embodiments of the present disclosure may adopt a form of a complete hardware embodiment, a complete software embodiment, or an embodiment combining software and hardware. In addition, the embodiments of the present disclosure may adopt a form of computer program products implemented on one or more computer-usable storage media (including but not limited to disk storage, Compact Disc Read-Only Memory (CD-ROM), optical storage, etc.) including computer-usable program codes.

The embodiments of the present disclosure are described with reference to flowcharts and/or block diagrams of the methods, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal devices to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal device to work in a specific manner, such that the instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices, so that a series of operation steps are executed on the computer or other programmable terminal devices to generate computer-implemented processing. Thus, the instructions executed on the computer or other programmable terminal devices provide steps for implementing functions specified in one or more processes in the flowchart and/or one or more blocks in the block diagram.

Although the preferred embodiments of the present disclosure have been described above, those skilled in the art can make additional changes and modifications to these embodiments once they learn the basic creative concept.

It should be noted that, in the present disclosure, relational terms herein, such as "first" and "second" are merely used to distinguish one entity or operation from another entity or operation, which, however do not necessarily require or imply that there should be any actual relationship or sequence between these entities or operations. Moreover, the terms "comprise", "include", or any other variants thereof are meant to cover non-exclusive including, such that the process, method, article or terminal device including a series of elements do not only include those elements, but also include other elements that are not explicitly listed, or also include inherent elements of the process, method, article or terminal device. Without specific limitations, an qualified defined by the statement "comprises a ..." does not exclude the presence of additional identical elements in the process, method, article, or terminal device that includes said element.

The map fusion method, the map fusion apparatus, the server, and the storage medium provided above are described in detail above. Specific examples are used herein to illustrate the principles and implementations of the present disclosure.

**Claims**

1. A computer-implemented map fusion method, comprising:

obtaining (S101) first three-dimensional map data and second three-dimensional map data;
determining (S102), for at least two first semantic elements in the first three-dimensional map data, at least two second semantic elements in the second three-dimensional map data that match the at least two first semantic elements;
determining (S103) first relative information between the at least two first semantic elements, and determining (S103) second relative information between the at least two second semantic elements;
optimizing (S104) the first three-dimensional map data and the second three-dimensional map data based on the first relative information and the second relative information; and
performing (S105) a map fusion on the optimized first three-dimensional map data and the optimized second three-dimensional map data,
wherein said optimizing (S104) the first three-dimensional map data and the second three-dimensional map data based on the first relative information and the second relative information comprises:

determining (S204) target information of the at least two first semantic elements and the at least two second semantic elements based on the first relative information and the second relative information; and
optimizing (S205) the first three-dimensional map data and the second three-dimensional map data based on the target information of the at least two first semantic elements and the at least two second semantic elements,
wherein the first relative information comprises first two-dimensional relative information and first three-dimensional relative information, the second relative information comprises second two-dimensional relative information and second three-dimensional relative information, and the target information comprises target two-dimensional information and target three-dimensional information, **characterized in that**, the first two-dimensional relative information comprises first relative pose information, the second two-dimensional relative information comprises second relative pose information, and the target two-dimensional information is target pose information, and
wherein said determining (S204) the target information of the at least two first semantic elements and the at least two second semantic elements based on the first relative information and the second relative information comprises:

determining a pose error value based on the first relative pose information and the second relative pose information;
determining, based on the pose error value, an association between pose information of the at least two first semantic elements and the at least two second semantic elements and a relative pose error; and determining the target pose information of the at least two first semantic elements and the at least two second semantic elements under a premise of a minimum relative pose error.

2. The method according to claim 1, wherein the first three-dimensional relative information comprises first relative height information, the second three-dimensional relative information comprises second relative height information, and the target three-dimensional information is target height information; and
wherein said determining (S204) the target information of the at least two first semantic elements and the at least two second semantic elements based on the first relative information and the second relative information comprises:

determining a height error value based on the first relative height information and the second relative height information;
determining, based on the height error value, an association between height information of the at least two first semantic elements and the at least two second semantic elements and a relative height error; and
determining target height information of the at least two first semantic elements and the at least two second semantic elements under a premise of a minimum relative height error.

3. The method according to claim 1, further comprising, prior to said determining (S103) first relative information between the at least two first semantic elements and said determining (S103) second relative information between the at least two second semantic elements:

determining (S303) a first conversion matrix for the first three-dimensional map data and a second conversion matrix for the second three-dimensional map data based on the at least two first semantic elements and the at least two second semantic elements; and
adjusting (S304) the first three-dimensional map data by using the first conversion matrix, and adjusting the second three-dimensional map data by using the second conversion matrix.

4. The method according to claim 1, further comprising:

determining (S308) a third semantic element in the first three-dimensional map data, wherein no semantic element in the second three-dimensional map data matches the third semantic element; and
adding (S309) the third semantic element to the map-fused second three-dimensional map data.

5. The method according to claim 1, wherein the first three-dimensional map data and the second three-dimensional map data are map data for a parking lot.

6. A map fusion apparatus, comprising:

a three-dimensional map data obtaining module (501) configured to obtain first three-dimensional map data and second three-dimensional map data;
a semantic element determining module (502) configured to determine, for at least two first semantic elements in the first three-dimensional map data, at least two second semantic elements in the second three-dimensional map data that match the at least two first semantic elements;
a relative information determining module (503) configured to determine first relative information between the at least two first semantic elements, and determine second relative information between the at least two second semantic elements;
an optimization module (504) configured to optimize the first three-dimensional map data and the second three-dimensional map data based on the first relative information and the second relative information; and
a fusion module (505) configured to perform a map fusion on the optimized first three-dimensional map data and the optimized second three-dimensional map data,
wherein the optimization module (504) comprises:

a target information determining sub-module configured to determine target information of the at least two first semantic elements and the at least two second semantic elements based on the first relative information and the second relative information; and
a three-dimensional map data optimization sub-module configured to optimize the first three-dimensional map data and the second three-dimensional map data based on the target information of the at least two first semantic elements and the at least two second semantic elements,

wherein the first relative information comprises first two-dimensional relative information and first three-dimensional relative information, the second relative information comprises second two-dimensional relative information and second three-dimensional relative information, and the target information comprises target two-dimensional information and target three-dimensional information, **characterized in that**, the first two-dimensional relative information comprises first relative pose information, the second two-dimensional relative information comprises second relative pose information, and the target two-dimensional information is target pose information, and

wherein the target information determining sub-module comprises:

a pose error determining unit configured to determine a pose error value based on the first relative pose information and the second relative pose information;

a relative pose error association determining unit configured to determine, based on the pose error value, an association between pose information of the at least two first semantic elements and the at least two second semantic elements and a relative pose error; and

a target pose information determining unit configured to determine the target pose information of the at least two first semantic elements and the at least two second semantic elements under a premise of a minimum relative pose error.

7. The apparatus according to claim 6, wherein the first three-dimensional relative information comprises first relative height information, the second three-dimensional relative information comprises second relative height information, and the target three-dimensional information is target height information; and

wherein the target information determining sub-module comprises:

a height error determining unit configured to determine a height error value based on the first relative height information and the second relative height information;

a relative height error association determining unit configured to determine, based on the height error value, an association between height information of the at least two first semantic elements and the at least two second semantic elements and a relative height error; and

a target height information determining unit configured to determine target height information of the at least two first semantic elements and the at least two second semantic elements under a premise of a minimum relative height error.

8. The apparatus according to claim 6, further comprising:

a conversion matrix determining module configured to determine a first conversion matrix for the first three-dimensional map data and a second conversion matrix for the second three-dimensional map data based on the at least two first semantic elements and the at least two second semantic elements; and

a three-dimensional map data adjustment module configured to adjust the first three-dimensional map data by using the first conversion matrix, and adjusting the second three-dimensional map data by using the second conversion matrix.

9. The apparatus according to claim 6, further comprising:

a third semantic element determining module configured to determine a third semantic element in the first three-dimensional map data, wherein no semantic element in the second three-dimensional map data matches the third semantic element; and

a third semantic element fusing module configured to add the third semantic element to the map-fused second three-dimensional map data.

10. A server, comprising a processor, a memory, and a computer program stored on the memory and executable on the processor, **characterized in that** the computer program, when executed by the processor, causes the processor to implement the map fusion method according to any one of claims 1 to 5.

11. A computer-readable storage medium, having a computer program stored thereon, **characterized in that** the computer program, when executed by a processor, causes the processor to implement the map fusion method according to any one of claims 1 to 5.

**Patentansprüche**

1. Computer-implementiertes Kartenfusionsverfahren, das Folgendes beinhaltet:

   Gewinnen (S101) von ersten dreidimensionalen Kartendaten und zweiten dreidimensionalen Kartendaten;
   Bestimmen (S102), für mindestens zwei erste semantische Elemente in den ersten dreidimensionalen Kartendaten, von mindestens zwei zweiten semantischen Elementen in den zweiten dreidimensionalen Kartendaten, die mit den mindestens zwei ersten semantischen Elementen übereinstimmen;
   Bestimmen (S103) erster relativer Informationen zwischen den mindestens zwei ersten semantischen Elementen, und Bestimmen (S103) zweiter relativer Informationen zwischen den mindestens zwei zweiten semantischen Elementen;
   Optimieren (S104) der ersten dreidimensionalen Kartendaten und der zweiten dreidimensionalen Kartendaten auf der Basis der ersten relativen Informationen und der zweiten relativen Informationen; und
   Durchführen (S105) einer Kartenfusion an den optimierten ersten dreidimensionalen Kartendaten und den optimierten zweiten dreidimensionalen Kartendaten,
   wobei das genannte Optimieren (S104) der ersten dreidimensionalen Kartendaten und der zweiten dreidimensionalen Kartendaten auf der Basis der ersten relativen Informationen und der zweiten relativen Informationen Folgendes beinhaltet:

   Bestimmen (S204) von Zielinformationen der mindestens zwei ersten semantischen Elemente und der mindestens zwei zweiten semantischen Elemente auf der Basis der ersten relativen Informationen und der zweiten relativen Informationen; und
   Optimieren (S205) der ersten dreidimensionalen Kartendaten und der zweiten dreidimensionalen Kartendaten auf der Basis der Zielinformationen der mindestens zwei ersten semantischen Elemente und der mindestens zwei zweiten semantischen Elemente,
   wobei die ersten relativen Informationen erste zweidimensionale relative Informationen und erste dreidimensionale relative Informationen umfassen, die zweiten relativen Informationen zweite zweidimensionale relative Informationen und zweite dreidimensionale relative Informationen umfassen und die Zielinformationen zweidimensionale Zielinformationen und dreidimensionale Zielinformationen umfassen,
   **dadurch gekennzeichnet, dass** die ersten zweidimensionalen relativen Informationen erste relative Lageinformationen umfassen, die zweiten zweidimensionalen relativen Informationen zweite relative Lageinformationen umfassen und die zweidimensionalen Zielinformationen Ziellageinformationen sind, und
   wobei das genannte Bestimmen (S204) der Zielinformationen der mindestens zwei ersten semantischen Elemente und der mindestens zwei zweiten semantischen Elemente auf der Basis der ersten relativen Informationen und der zweiten relativen Informationen Folgendes beinhaltet:

   Bestimmen eines Lagefehlerwertes auf der Basis der ersten relativen Lageinformationen und der zweiten relativen Lageinformationen;
   Bestimmen, auf der Basis des Lagefehlerwertes, einer Assoziation zwischen Lageinformationen der mindestens zwei ersten semantischen Elemente und der mindestens zwei zweiten semantischen Elemente und einem relativen Lagefehler; und
   Bestimmen der Ziellageinformationen der mindestens zwei ersten semantischen Elemente und der mindestens zwei zweiten semantischen Elemente unter einer Prämisse eines minimalen relativen Lagefehlers.

2. Verfahren nach Anspruch 1, wobei die ersten dreidimensionalen relativen Informationen erste relative Höheninformationen umfassen, die zweiten dreidimensionalen relativen Informationen zweite relative Höheninformationen umfassen und die dreidimensionalen Zielinformationen Zielhöheninformationen sind; und
   wobei das genannte Bestimmen (S204) der Zielinformationen der mindestens zwei ersten semantischen Elemente und der mindestens zwei zweiten semantischen Elemente auf der Basis der ersten relativen Informationen und der zweiten relativen Informationen Folgendes beinhaltet:

   Bestimmen eines Höhenfehlerwertes auf der Basis der ersten relativen Höheninformationen und der zweiten relativen Höheninformationen;
   Bestimmen, auf der Basis des Höhenfehlerwertes, einer Assoziation zwischen Höheninformationen der mindestens zwei ersten semantischen Elemente und der mindestens zwei zweiten semantischen Elemente und einem relativen Höhenfehler; und
   Bestimmen von Zielhöheninformationen der mindestens zwei ersten semantischen Elemente und der mindestens zwei zweiten semantischen Elemente unter einer Prämisse eines minimalen relativen Höhenfehlers.

3. Verfahren nach Anspruch 1, das ferner, vor dem genannten Bestimmen (S103) erster relativer Informationen zwischen den mindestens zwei ersten semantischen Elementen und dem genannten Bestimmen (S103) zweiter relativer Informationen zwischen den mindestens zwei zweiten semantischen Elementen, Folgendes beinhaltet:

Bestimmen (S303) einer ersten Konvertierungsmatrix für die ersten dreidimensionalen Kartendaten und einer zweiten Konvertierungsmatrix für die zweiten dreidimensionalen Kartendaten auf der Basis der mindestens zwei ersten semantischen Elemente und der mindestens zwei zweiten semantischen Elemente; und
Justieren (S304) der ersten dreidimensionalen Kartendaten anhand der ersten Konvertierungsmatrix, und Justieren der zweiten dreidimensionalen Kartendaten anhand der zweiten Konvertierungsmatrix.

4. Verfahren nach Anspruch 1, das ferner Folgendes beinhaltet:

Bestimmen (S308) eines dritten semantischen Elements in den ersten dreidimensionalen Kartendaten, wobei kein semantisches Element in den zweiten dreidimensionalen Kartendaten mit dem dritten semantischen Element übereinstimmt; und
Hinzufügen (S309) des dritten semantischen Elements zu den kartenfusionierten zweiten dreidimensionalen Kartendaten.

5. Verfahren nach Anspruch 1, wobei die ersten dreidimensionalen Kartendaten und die zweiten dreidimensionalen Kartendaten Kartendaten für einen Parkplatz sind.

6. Kartenfusionsvorrichtung, die Folgendes umfasst:

ein Dreidimensionale-Kartendaten-Gewinnungsmodul (501), das zum Gewinnen von ersten dreidimensionalen Kartendaten und von zweiten dreidimensionalen Kartendaten konfiguriert ist;
ein Semantisches-Element-Bestimmungsmodul (502), das zum Bestimmen, für mindestens zwei erste semantische Elemente in den ersten dreidimensionalen Kartendaten, von mindestens zwei zweiten semantischen Elementen in den zweiten dreidimensionalen Kartendaten konfiguriert ist, die mit den mindestens zwei ersten semantischen Elementen übereinstimmen;
ein Relative-Informationen-Bestimmungsmodul (503), das zum Bestimmen erster relativer Informationen zwischen den mindestens zwei ersten semantischen Elementen und zum Bestimmen zweiter relativer Informationen zwischen den mindestens zwei zweiten semantischen Elementen konfiguriert ist;
ein Optimierungsmodul (504), das zum Optimieren der ersten dreidimensionalen Kartendaten und der zweiten dreidimensionalen Kartendaten auf der Basis der ersten relativen Informationen und der zweiten relativen Informationen konfiguriert ist; und
ein Fusionsmodul (505), das zum Durchführen einer Kartenfusion an den optimierten ersten dreidimensionalen Kartendaten und den optimierten zweiten dreidimensionalen Kartendaten konfiguriert ist,
wobei das Optimierungsmodul (504) Folgendes umfasst:

ein Zielinformationsbestimmungs-Submodul, das zum Bestimmen von Zielinformationen der mindestens zwei ersten semantischen Elemente und der mindestens zwei zweiten semantischen Elemente auf der Basis der ersten relativen Informationen und der zweiten relativen Informationen konfiguriert ist; und
ein Dreidimensionale-Kartendaten-Optimierungssubmodul, das zum Optimieren der ersten dreidimensionalen Kartendaten und der zweiten dreidimensionalen Kartendaten auf der Basis der Zielinformationen der mindestens zwei ersten semantischen Elemente und der mindestens zwei zweiten semantischen Elemente konfiguriert ist,
wobei die ersten relativen Informationen erste zweidimensionale relative Informationen und erste dreidimensionale relative Informationen umfassen, die zweiten relativen Informationen zweite zweidimensionale relative Informationen und zweite dreidimensionale relative Informationen umfassen und die Zielinformationen zweidimensionale Zielinformationen und dreidimensionale Zielinformationen umfassen, **dadurch gekennzeichnet, dass** die ersten zweidimensionalen relativen Informationen erste relative Lageinformationen umfassen, die zweiten zweidimensionalen relativen Informationen zweite relative Lageinformationen umfassen und die zweidimensionalen Zielinformationen Ziellageinformationen sind, und
wobei das Zielinformationsbestimmungs-Submodul Folgendes umfasst:

eine Lagefehler-Bestimmungseinheit, die zum Bestimmen eines Lagefehlerwertes auf der Basis der ersten relativen Lageinformationen und der zweiten relativen Lageinformationen konfiguriert ist; eine Relative-Lagefehlerassoziations-Bestimmungseinheit, die zum Bestimmen, auf der Basis des Lagefehlerwertes, einer Assoziation zwischen Lageinformationen der mindestens zwei ersten semantischen Elemente und der mindestens zwei zweiten semantischen Elemente und einem relativen Lagefehler konfiguriert ist; und

eine Ziellageinformations-Bestimmungseinheit, die zum Bestimmen der Ziellageinformationen der mindestens zwei ersten semantischen Elemente und der mindestens zwei zweiten semantischen Elemente unter einer Prämisse eines minimalen relativen Lagefehlers konfiguriert ist.

7. Vorrichtung nach Anspruch 6, wobei die ersten dreidimensionalen relativen Informationen erste relative Höheninformationen umfassen, die zweiten dreidimensionalen relativen Informationen zweite relative Höheninformationen umfassen und die dreidimensionalen Zielinformationen Zielhöheninformationen sind; und wobei das Zielinformationsbestimmungs-Submodul Folgendes umfasst:

eine Höhenfehler-Bestimmungseinheit, die zum Bestimmen eines Höhenfehlerwertes auf der Basis der ersten relativen Höheninformationen und der zweiten relativen Höheninformationen konfiguriert ist; eine Relative-Höhenfehlerassoziations-Bestimmungseinheit, die zum Bestimmen, auf der Basis des Höhenfehlerwertes, einer Assoziation zwischen Höheninformationen der mindestens zwei ersten semantischen Elemente und der mindestens zwei zweiten semantischen Elemente und einem relativen Höhenfehler konfiguriert ist; und

eine Zielhöheninformations-Bestimmungseinheit, die zum Bestimmen von Zielhöheninformationen der mindestens zwei ersten semantischen Elemente und der mindestens zwei zweiten semantischen Elemente unter einer Prämisse eines minimalen relativen Höhenfehlers konfiguriert ist.

8. Vorrichtung nach Anspruch 6, die ferner Folgendes umfasst:

ein Konvertierungsmatrix-Bestimmungsmodul, das zum Bestimmen einer ersten Konvertierungsmatrix für die ersten dreidimensionalen Kartendaten und einer zweiten Konvertierungsmatrix für die zweiten dreidimensionalen Kartendaten auf der Basis der mindestens zwei ersten semantischen Elemente und der mindestens zwei zweiten semantischen Elemente konfiguriert ist; und

ein Dreidimensionale-Kartendaten-Justiermodul, das zum Justieren der ersten dreidimensionalen Kartendaten anhand der ersten Konvertierungsmatrix und Justieren der zweiten dreidimensionalen Kartendaten anhand der zweiten Konvertierungsmatrix konfiguriert ist.

9. Vorrichtung nach Anspruch 6, die ferner Folgendes umfasst:

ein Drittes-Semantisches-Element-Bestimmungsmodul, das zum Bestimmen eines dritten semantischen Elements in den ersten dreidimensionalen Kartendaten konfiguriert ist, wobei kein semantisches Element in den zweiten dreidimensionalen Kartendaten mit dem dritten semantischen Element übereinstimmt; und ein Drittes-Semantisches-Element-Fusionierungsmodul, das zum Hinzufügen des dritten semantischen Elements zu den kartenfusionierten zweiten dreidimensionalen Kartendaten konfiguriert ist.

10. Server, der einen Prozessor, einen Speicher und ein Computerprogramm umfasst, das in dem Speicher gespeichert und auf dem Prozessor ausführbar ist, **dadurch gekennzeichnet, dass** das Computerprogramm bei Ausführung durch den Prozessor den Prozessor veranlasst, das Kartenfusionsverfahren nach einem der Ansprüche 1 bis 5 zu implementieren.

11. Computerlesbares Speichermedium, auf dem ein Computerprogramm gespeichert ist, **dadurch gekennzeichnet, dass** das Computerprogramm bei Ausführung durch einen Prozessor den Prozessor veranlasst, das Kartenfusionsverfahren nach einem der Ansprüche 1 bis 5 zu implementieren.

**Revendications**

1. Procédé de fusion de cartes mis en oeuvre par ordinateur, comprenant :

une obtention (S101) de premières données de carte tridimensionnelle et de secondes données de carte tridimensionnelle ;

une détermination (S 102), pour au moins deux premiers éléments sémantiques dans les premières données de carte tridimensionnelle, d'au moins deux deuxièmes éléments sémantiques dans les secondes données de carte tridimensionnelle qui correspondent aux au moins deux premiers éléments sémantiques ;

une détermination (S103) de premières informations relatives entre les au moins deux premiers éléments sémantiques, et une détermination (S103) de secondes informations relatives entre les au moins deux deuxièmes éléments sémantiques ;

une optimisation (S104) des premières données de carte tridimensionnelle et des secondes données de carte tridimensionnelle sur la base des premières informations relatives et des secondes informations relatives ; et

une réalisation (S105) d'une fusion de cartes sur les premières données de carte tridimensionnelle optimisées et les secondes données de carte tridimensionnelle optimisées,

dans lequel ladite optimisation (S104) des premières données de carte tridimensionnelle et des secondes données de carte tridimensionnelle sur la base des premières informations relatives et des secondes informations relatives comprend :

une détermination (S204) d'informations de cible des au moins deux premiers éléments sémantiques et les au moins deux deuxièmes éléments sémantiques sur la base des premières informations relatives et des secondes informations relatives ; et

une optimisation (S205) des premières données de carte tridimensionnelle et des secondes données de carte tridimensionnelle sur la base des informations de cible des au moins deux premiers éléments sémantiques et des au moins deux deuxièmes éléments sémantiques,

dans lequel les premières informations relatives comprennent de premières informations relatives bidimensionnelles et de premières informations relatives tridimensionnelles, les secondes informations relatives comprennent de secondes informations relatives bidimensionnelles et de secondes informations relatives tridimensionnelles, et les informations de cible comprennent des informations bidimensionnelles de cible et des informations tridimensionnelles de cible,

**caractérisé en ce que** les premières informations relatives bidimensionnelles comprennent de premières informations de pose relatives, les secondes informations relatives bidimensionnelles comprennent de secondes informations de pose relatives, et les informations bidimensionnelles de cible sont des informations de pose de cible, et

dans lequel ladite détermination (S204) des informations de cible des au moins deux premiers éléments sémantiques et les au moins deux deuxièmes éléments sémantiques sur la base des premières informations relatives et des secondes informations relatives, comprend :

une détermination d'une valeur d'erreur de pose sur la base des premières informations de pose relatives et des secondes informations de pose relatives ;

une détermination, sur la base de la valeur d'erreur de pose, d'une association entre des informations de pose des au moins deux premiers éléments sémantiques et les au moins deux deuxièmes éléments sémantiques et une erreur de pose relative ; et

une détermination des informations de pose de cible des au moins deux premiers éléments sémantiques et des au moins deux deuxièmes éléments sémantiques sur la base d'une erreur de pose relative minimum.

2. Procédé selon la revendication 1, dans lequel les premières informations relatives tridimensionnelles comprennent de premières informations relatives de hauteur, les secondes informations relatives tridimensionnelles comprennent de secondes informations relatives de hauteur, et les informations tridimensionnelles de cible sont des informations de hauteur de cible ; et

dans lequel ladite détermination (S204) des informations de cible des au moins deux premiers éléments sémantiques et des au moins deux deuxièmes éléments sémantiques sur la base des premières informations relatives et des secondes informations relatives, comprend :

une détermination d'une valeur d'erreur de hauteur sur la base des premières informations relatives de hauteur et des secondes informations relatives de hauteur ;

une détermination, sur la base de la valeur d'erreur de hauteur, d'une association entre des informations de hauteur des au moins deux premiers éléments sémantiques et des au moins deux deuxièmes éléments sémantiques et une erreur de hauteur relative ; et

une détermination des informations de hauteur de cible des au moins deux premiers éléments sémantiques et des au moins deux deuxièmes éléments sémantiques sur la base d'une erreur de hauteur relative minimum.

3. Procédé selon la revendication 1, comprenant en outre, avant ladite détermination (S103) de premières informations relatives entre les au moins deux premiers éléments sémantiques et ladite détermination (S103) de secondes informations relatives entre les au moins deux deuxièmes éléments sémantiques :

    une détermination (S303) d'une première matrice de conversion pour les premières données de carte tridimensionnelle et d'une seconde matrice de conversion pour les secondes données de carte tridimensionnelle sur la base des au moins deux premiers éléments sémantiques et des au moins deux deuxièmes éléments sémantiques ; et
    un ajustement (S304) des premières données de carte tridimensionnelle en utilisant la première matrice de conversion, et un ajustement des secondes données de carte tridimensionnelle en utilisant la seconde matrice de conversion.

4. Procédé selon la revendication 1, comprenant en outre :

    une détermination (S308) d'un troisième élément sémantique dans les premières données de carte tridimensionnelle, dans lequel aucun élément sémantique dans les secondes données de carte tridimensionnelle ne correspond au troisième élément sémantique ; et
    un ajout (S309) du troisième élément sémantique aux secondes données de carte tridimensionnelle de carte fusionnée.

5. Procédé selon la revendication 1, dans lequel les premières données de carte tridimensionnelle et les secondes données de carte tridimensionnelle sont des données de carte pour un parc de stationnement.

6. Appareil de fusion de cartes, comprenant :

    un module d'obtention (501) de données de carte tridimensionnelle configuré pour obtenir de premières données de carte tridimensionnelle et de secondes données de carte tridimensionnelle ;
    un module de détermination (502) d'éléments sémantiques configuré pour déterminer, pour au moins deux premiers éléments sémantiques dans les premières données de carte tridimensionnelle, au moins deux deuxièmes éléments sémantiques dans les secondes données de carte tridimensionnelle qui correspondent aux au moins deux premiers éléments sémantiques ;
    un module de détermination (503) d'informations relatives configuré pour déterminer de premières informations relatives entre les au moins deux premiers éléments sémantiques, et pour déterminer de secondes informations relatives entre les au moins deux deuxièmes éléments sémantiques ;
    un module d'optimisation (504) configuré pour optimiser les premières données de carte tridimensionnelle et les secondes données de carte tridimensionnelle sur la base des premières informations relatives et des secondes informations relatives ; et
    un module de fusion (505) configuré pour réaliser une fusion de cartes sur les premières données de carte tridimensionnelle optimisées et les secondes données de carte tridimensionnelle optimisées,
    dans lequel le module d'optimisation (504) comprend :

        un sous-module de détermination d'informations de cible configuré pour déterminer des informations de cible des au moins deux premiers éléments sémantiques et des au moins deux deuxièmes éléments sémantiques sur la base des premières informations relatives et des secondes informations relatives ; et
        un sous-module d'optimisation de données de carte tridimensionnelle configuré pour optimiser les premières données de carte tridimensionnelle et les secondes données de carte tridimensionnelle sur la base des informations de cible des au moins deux premiers éléments sémantiques et des au moins deux deuxièmes éléments sémantiques,
        dans lequel les premières informations relatives comprennent de premières informations relatives bidimensionnelles et de premières informations relatives tridimensionnelles, les secondes informations relatives comprennent de secondes informations relatives bidimensionnelles et de secondes informations relatives tridimensionnelles, et les informations de cible comprennent des informations bidimensionnelles de cible et des informations tridimensionnelles de cible,
        **caractérisé en ce que** les premières informations relatives bidimensionnelles comprennent de premières informations de pose relatives, les secondes informations relatives bidimensionnelles comprennent de secondes informations de pose relatives, et les informations bidimensionnelles de cible sont des informations de pose de cible, et
        dans lequel le sous-module de détermination d'informations de cible comprend :

une unité de détermination d'erreur de pose configurée pour déterminer une valeur d'erreur de pose sur la base des premières informations de pose relatives et des secondes informations de pose relatives ;

une unité de détermination d'association d'erreur de pose relative configurée pour déterminer, sur la base de la valeur d'erreur de pose, une association entre des informations de pose des au moins deux premiers éléments sémantiques et des au moins deux deuxièmes éléments sémantiques et une erreur de pose relative ; et

une unité de détermination d'informations de pose de cible configurée pour déterminer les informations de pose de cible des au moins deux premiers éléments sémantiques et des au moins deux deuxièmes éléments sémantiques sur la base d'une erreur de pose relative minimum.

7. Appareil selon la revendication 6, dans lequel les premières informations relatives tridimensionnelles comprennent de premières informations relatives de hauteur, les secondes informations relatives tridimensionnelles comprennent de secondes informations relatives de hauteur, et les informations tridimensionnelles de cible sont des informations de hauteur de cible ; et

dans lequel le sous-module de détermination d'informations de cible comprend :

une unité de détermination d'erreur de hauteur configurée pour déterminer une valeur d'erreur de hauteur sur la base des premières informations relatives de hauteur et des secondes informations relatives de hauteur ;

une unité de détermination d'association d'erreur de hauteur relative configurée pour déterminer, sur la base de la valeur d'erreur de hauteur, une association entre des informations de hauteur des au moins deux premiers éléments sémantiques et des au moins deux deuxièmes éléments sémantiques et une erreur de hauteur relative ; et

une unité de détermination d'informations de hauteur de cible configurée pour déterminer des informations de hauteur de cible des au moins deux premiers éléments sémantiques et des au moins deux deuxièmes éléments sémantiques sur la base d'une erreur de hauteur relative minimum.

8. Appareil selon la revendication 6, comprenant en outre :

un module de détermination de matrice de conversion configuré pour déterminer une première matrice de conversion pour les premières données de carte tridimensionnelle et une seconde matrice de conversion pour les secondes données de carte tridimensionnelle sur la base des au moins deux premiers éléments sémantiques et des au moins deux deuxièmes éléments sémantiques ; et

un module d'ajustement de données de carte tridimensionnelle configuré pour ajuster les premières données de carte tridimensionnelle en utilisant la première matrice de conversion, et en ajustant les secondes données de carte tridimensionnelle en utilisant la seconde matrice de conversion.

9. Appareil selon la revendication 6, comprenant en outre :

un module de détermination de troisième élément sémantique configuré pour déterminer un troisième élément sémantique dans les premières données de carte tridimensionnelle, dans lequel aucun élément sémantique dans les secondes données de carte tridimensionnelle ne correspond au troisième élément sémantique ; et

un module de fusion de troisième élément sémantique configuré pour ajouter le troisième élément sémantique aux secondes données de carte tridimensionnelles de carte fusionnée.

10. Serveur, comprenant un processeur, une mémoire, et un programme informatique stocké sur la mémoire et exécutable sur le processeur, **caractérisé en ce que** le programme informatique, lorsqu'exécuté par le processeur, amène le processeur à mettre en oeuvre le procédé de fusion de cartes selon l'une quelconque des revendications 1 à 5.

11. Support de stockage lisible par ordinateur, présentant un programme informatique stocké dessus, **caractérisé en ce que** le programme informatique, lorsqu'exécuté par un processeur, amène le processeur à mettre en oeuvre le procédé de fusion de cartes selon l'une quelconque des revendications 1 à 5.

Obtaining first three-dimensional map data and second three-dimensional map data — 101

Determining, for at least two first semantic elements in the first three-dimensional map data, at least two second semantic elements in the second three-dimensional map data that match the at least two first semantic elements — 102

Determining first relative information between the at least two first semantic elements, and determining second relative information between the at least two second semantic elements — 103

Optimizing the first three-dimensional map data and the second three-dimensional map data based on the first relative information and the second relative information — 104

Performing a map fusion on the optimized first three-dimensional map data and the optimized second three-dimensional map data — 105

FIG. 1

Obtaining first three-dimensional map data and second three-
dimensional map data

201

Determining, for at least two first semantic elements in the first
three-dimensional map data, at least two second semantic elements in
the second three-dimensional map data that match the at least two first
semantic elements

202

Determining first relative information between the at least two
first semantic elements, and determining second relative information
between the at least two second semantic elements

203

Determining target information of the at least two first semantic
elements and the at least two second semantic elements based on the
first relative information and the second relative information

204

Optimizing the first three-dimensional map data and the second three-
dimensional map data based on the target information of the at least
two first semantic elements and the at least two second semantic
elements

205

Performing a map fusion on the optimized first three-dimensional map
data and the optimized second three-dimensional map data

206

FIG. 2a

FIG. 2b

FIG. 2c

Obtaining first three-dimensional map data and second three-dimensional map data — 301

Determining, for at least two first semantic elements in the first three-dimensional map data, at least two second semantic elements in the second three-dimensional map data that match the at least two first semantic elements — 302

Determining a first conversion matrix for the first three-dimensional map data and a second conversion matrix for the second three-dimensional map data based on the at least two first semantic elements and the at least two second semantic elements — 303

Adjusting the first three-dimensional map data by using the first conversion matrix, and adjusting the second three-dimensional map data by using the second conversion matrix — 304

Determining first relative information between the at least two first semantic elements, and determining second relative information between the at least two second semantic elements — 305

Optimizing the first three-dimensional map data and the second three-dimensional map data based on the first relative information and the second relative information — 306

Performing a map fusion on the optimized first three-dimensional map data and the optimized second three-dimensional map data — 307

Determining a third semantic element in the first three-dimensional map data, no semantic element in the second three-dimensional map data matching the third semantic element — 308

Adding the third semantic element to the map-fused second three-dimensional map data — 309

FIG. 3

Overall map matching

↓

Whether matching ———— No

↓ Yes

Weighted deflection

↓

Plane pose optimization

↓

Height optimization

↓

Fusing map matching areas

↓

Adding map unmatching area

FIG. 4

| Three-dimensional map data obtaining module 501 |
| Semantic element determining module 502 |
| Relative information determining module 503 |
| Optimization module 504 |
| Fusion module 505 |

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202011224448 A

**Non-patent literature cited in the description**

- Submap-based SLAM for road markings. **REHDER EIKE et al.** 2015 IEEE INTELLIGENT VEHICLES SYMPOSIUM. IEEE, 28 June 2015, vol. IV, 1393-1398

- **TONG QIN et al.** AVP-SLAM: Semantic Visual Mapping and Localization for Autonomous Vehicles in the Parking Lot. *ARXIV.ORG,* 08 July 2020